# EUROPÄISCHE PATENTSCHRIFT

(11) **EP 1 166 953 B1**
(45) Veröffentlichungstag und Bekanntmachung des Hinweises auf die Patenterteilung: **07.06.2006**
(21) Anmeldenummer: 01710028.0
(22) Anmeldetag: 15.06.2001
(51) Int. Cl.: B23Q 1/01, B23Q 1/62

(54) **Werkzeugmaschine mit einem Führungssystem für eine Koordinatenfahrwerk**
Machine tool with Guiding system for a body with motion in three orthogonal directions
Machine-outil avec un système de guidage pour un chassis à déplacements rectangulaires conjugués

(30) Priorität: 29.06.2000 DE 10032552
(43) Veröffentlichungstag der Anmeldung: 02.01.2002
(73) Patentinhaber: ALZMETALL WERKZEUGMASCHINENFABRIK UND GIESSEREI FRIEDRICH GMBH & CO., 83352 Altenmarkt/Alz. (DE)
(72) Erfinder: Probst, Ludwig, 83278 Traunstein (DE)
(74) Vertreter: Pfenning, Meinig & Partner GbR

(56) Entgegenhaltungen:
- WO-A-97/27024
- FR-A- 2 699 233
- US-A- 4 484 387

## Beschreibung

Die Erfindung betrifft eine Werkzeugmaschine zur zerspanenden Bearbeitung von Bauteilen mit Führungssystem für ein Koordinatenfahrwerk. Mit einer solchen Werkzeugmaschine können Bohr- und Fräsarbeiten an den verschiedenst konturierten und geometrisch gestalteten Bauteilen, insbesondere bei der Hochgeschwindigkeits- und Hartbearbeitung durchgeführt werden.

Die Anforderungen an die Wirtschaftlichkeit bei der Bearbeitung von Bauteilen steigen ständig, so dass zur Erzielung kurzer Zerspanungs- und demzufolge auch Taktzeiten hohe Bearbeitungsgeschwindigkeiten erzielt werden müssen. Gleichzeitig werden aber auch hohe Qualitätsanforderungen an die zu bearbeitenden Bau - teile gestellt. Demzufolge müssen trotz der höheren Dynamik bei Hochgeschwindigkeitsbearbeitungen die Positionsgenauigkeit der Werkzeuge eingehalten und entsprechend die Steifigkeit der Maschinengestelle und der Führungssysteme, die an einer solchen Werkzeugmaschine eingesetzt werden, erhöht werden.

Außerdem wird anwenderseitig gefordert, dass alle dynamischen Funktionselemente, wie beispielsweise Achsantriebe, Achsführungen, Achsmesssysteme und auch der Hauptantrieb außerhalb des Zerspanungsraumes angeordnet sind. Für solche Maschinen hat sich der Begriff "Gantry-Maschinen" eingebürgert, wobei es sich dabei um ähnlich wie Brücken ausgebildete Konstruktionen handelt. Die Führungen, mit denen die Werkzeuge, in der Regel in mehreren Achsen in Bezug zu auf Maschinentischen gespannten Werkstücken bewegt und positioniert werden können, sind dabei auf Seitenwände eines statischen Maschinengestells und eine solche "Brücke" aufgelegt, zwischen bzw. unter denen der bereits erwähnte Maschinentisch zur Aufnahme von Werkstücken angeordnet ist.

Die Seitenwände, die parallel zueinander ausgerichtet und gegenüberliegend zueinander angeordnet sind, bilden dabei die Stützen einer solchen Brücke und ein so genanntes Kreuzteil, das Bestandteil eines Koordinatenfahrwerkes ist, kann zumindest entlang einer Achse, die durch die Längsachse der Seitenwände vorgegeben ist, bewegt werden. Ein solches Kreuzteil eines Koordinatenfahrwerkes ist in der Regel aber auch so ausgelegt, dass eine Bewegung des Werkzeuges in einer orthogonal zu der bereits erwähnten ersten Achse ausgerichteten weiteren Achse möglich ist, wobei das rotatorisch angetriebene Werkzeug in einer Pinole zur Realisierung einer Zustellung in einer dritten Achse geführt ist.

Eine Werkzeugmaschine, bei der dieses Prinzip zumindest teilweise realisiert worden ist, wurde in DE 44 41 253 A1 beschrieben.

Bei den bekannten Lösungen wirken infolge der Zerspanungs- und/oder Beschleunigungskräfte zusätzliche Kräfte und Momente auf die bereits erwähnten Seitenwände und eine "Brücke", die entsprechend ihrer physikalischen und mechanischen Eigenschaften (Flächenträgheitsmoment, E-Modul und Abmaße) um einen diesen Faktoren entsprechenden Betrag y ausgelenkt und an definierter Stelle verbogen werden.

Die verwendeten Axialführungselemente, die in einer Ebene angeordnet sind, wirken dabei wie Drehgelenke und es wirken Momente um die Längsachse der Axialführungselemente, so dass sich die Seitenwände verbiegen und die Positionsgenauigkeit des Werkzeuges verringert ist. Außerdem führen die eingeleiteten Drehmomente zu erhöhten Flächenpressungen an den Führungselementen und insbesondere an den dort verwendeten Wälzkörpern, was zu einer Verkürzung der Lebensdauer der Führungselemente führt.

Gleiche Verhältnisse wirken an der orthognal zur Längsachse der Seitenwände ausgerichteten Axialführung, in der das Werkzeug ebenfalls verschoben werden kann. Entlang dieser Achse ist in der Regel die Verbiegung und entsprechende Auslenkung jedoch größer, da dieser Teil der Brückenkonstruktion bzw. des Kreuzteiles ein kleineres Flächenträgheitsmoment bzw. Widerstandsmoment aufweist.

Die infolge der Verbiegungen auftretenden Geometriefehler bei der Bearbeitung am Werkstück werden von den Achsmesssystemen nicht erfasst und können demzufolge auch während der Bearbeitung nicht kompensiert werden, so dass die Qualität und Bearbeitungsgenauigkeit verringert ist. Die Größe der auftretenden Geometriefehler wird zusätzlich von der Position des Werkzeuges, die durch Verschiebung der Spindel auftritt, also dem jeweiligen Abstand des Werkzeuges von den Führungen im Koordinatenfahrwerk beeinflusst.

Des Weiteren ist aus FR 2 699 233 A1 ein Horizontal-Portal-Tragsystem bekannt, bei dem zwei Horizontalträger parallel zueinander angeordnet und ausgerichtet sind, die außerdem an vier in Abständen zueinander angeordneten Säulen befestigt sind. An den Horizontalträgern sind innenliegend jeweils zwei parallel zueinander und horizontal ausgerichtete Führungen für eine Horizontaltraverse, die in entlang der Führungen translatorisch verschiebbar ist, vorhanden.

Es ist daher Aufgabe der Erfindung, eine Werkzeugmaschine mit einem Führungssystem für ein Koordinatenfahrwerk zur Verfügung zu stellen, die eine erhöhte statische und dynamische Steifigkeit aufweist.

Erfindungsgemäß wird diese Aufgabe mit einer Werkzeugmaschine mit den Merkmalen des Anspruchs 1 gelöst. Vorteilhafte Ausgestaltungsformen und Weiterbildungen der Erfindung können mit den in den untergeordneten Ansprüchen genannten Merkmalen erreicht werden.

Bei der erfindungsgemäßen Werkzeugmaschine mit Führungssystem für ein Koordinatenfahrwerk einer Werkzeugmaschine wird das bereits eingangs erwähnte "Gantry-Prinzip" aufgegriffen und zumindest zwei Seitenwände, zwischen denen ein Maschinentisch, auf dem Bauteile spannend befestigt werden können, verwendet.

Im Gegensatz zu den bekannten Lösungen werden Führungen nicht auf den äußeren Stirnflächen solcher Seitenwände angeordnet bzw. aufgelegt, sondern sie sind jeweils innenliegend an den Seitenwänden und außerdem paarweise dort angeordnet, so dass solche axialen Führungselemente innenliegend in zwei Ebenen, die in einem Abstand zueinander liegen, angeordnet werden.

Dadurch kann gegenüber den bekannten Lösungen die Verbiegung der Seitenwände und demzufolge auch die Auslenkung auf den halben Betrag reduziert werden, da in die Seitenwände des Maschinengestells bei wirkenden Querkräften zwei gegenläufige Biegebeanspruchungen eingeleitet werden.

Außerdem tritt keine Einleitung von Momenten in die Führungselemente um die Längsachse der Führungen auf, so dass der wirkende Verschleiß erheblich reduziert und die Lebensdauer verlängert werden kann.

Das Prinzip der innenliegenden, in zwei Ebenen angeordneten Führungen kann selbstverständlich auch in weiteren Achsen eines Führungssystems für ein Koordinatenfahrwerk einer Werkzeugmaschine angewendet werden. Diese Führungen können ebenfalls paarweise innenliegend und orthogonal zu den an den Seitenwänden angeordneten Führungen an zwei Brückenträgern angeordnet sein, um ein Werkzeug in zwei Achsen in Bezug zu einem bearbeitenden Werkstück positionieren zu können. Die beiden Brückenträger sind in den an den Seitenwänden angeordneten Führungen geführt und gehalten.

In diesem Fall können zwei Brückenträger mit einem Kreuzteil einen Bestandteil eines Koordinatenfahrwerkes bilden. Dabei kann in einem solchen Kreuzteil eine Pinole für den Antrieb von Werkzeugen geführt und gehalten sein, so dass die Pinole mit Werkzeug und Antriebswelle mit Hilfe des Kreuzteiles und der Führungssysteme in den bereits erwähnten zwei Achsen und über die Pinole eine dritte Achsbewegung von Werkzeugen möglich ist. Hierzu können zwei weitere Führungen an der Pinole an gegenüberliegenden Seiten angeordnet sein, in denen diese geführt ist. Diese Führungen für das Kreuzteil sind orthogonal zu zumindest einer der bereits erwähnten Axialführungen ausgerichtet.

Zur Verringerung der für die Bewegung des Koordinatenfahrwerkes erforderlichen Kräfte und Belastungen sind in den Führungen Wälzkörper vorhanden.

Nachfolgend soll die Erfindung anhand von Ausführungsbeispielen näher beschrieben werden.

Dabei zeigen:
- Figur 1: zwei Ansichten eines bekannten Führungs- systems mit aufliegendem Koordinatenfahrwerk;
- Figur 2: eine schematische Darstellung eines erfindungsgemäßen Führungssystems für ein Koordinatenfahrwerk an einer Werkzeugmaschine in zwei Ansichten;
- Figur 3: die Einzelheit "X" aus Figur 1 in schematischer Form mit kraftbedingter Verformung einer Seitenwand;
- Figur 4: Einzelheit "Z" aus Figur 2 in schematischer Darstellung mit kraftwirkungsbedingter verringerter Verformung und
- Figur 5: in schematischer Darstellung ein Beispiel einer Werkzeugmaschine mit einem Führungssystem für ein Koordinatenfahrwerk.

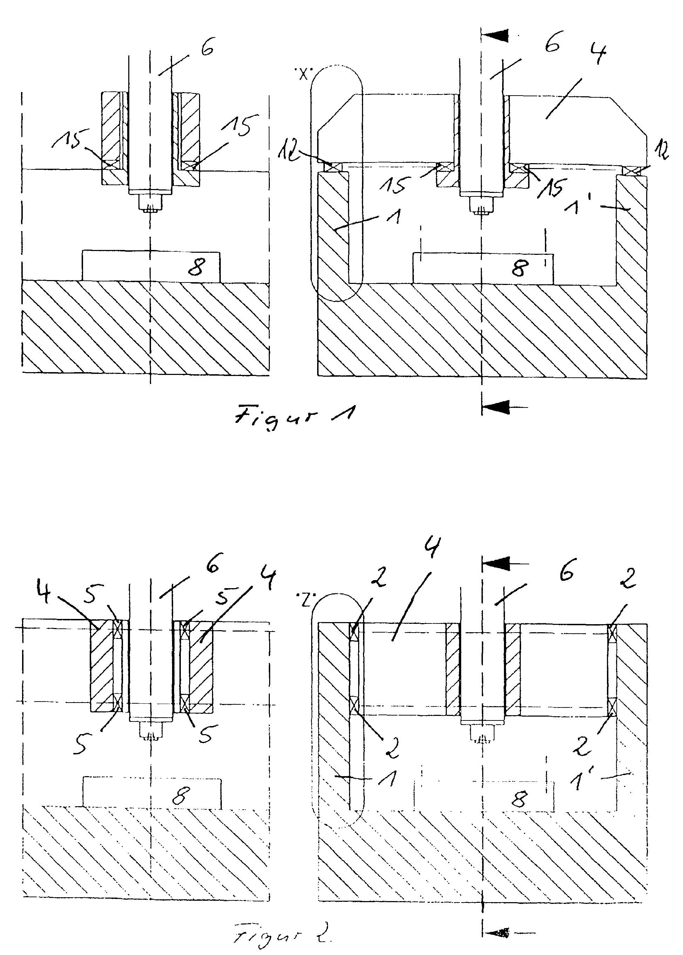

In der Figur 1 ist in zwei Ansichten schematisch ein herkömmliches das "Gantry-Prinzip" nutzende Konzept für ein Führungssystem dargestellt, bei dem Führungen 12 auf Stirnseiten von Seitenwänden 1 und 1' eines Maschinengestells angeordnet sind, die eine Bewegung einer Brücke oder eines Kreuzteils 4 entlang der y-Achse, d.h. aus der Zeichnungsebene heraus bzw. hinein des hier nicht dargestellten Werkzeuges mit der Pinole 6 ermöglichen. Des Weiteren sind Führungen 15 verwendet worden, die eine entsprechende orthogonal zu dieser Achse, nämlich in x-Achsrichtung gerichtete Bewegung, von Pinole 6 und Werkzeug ermöglichen.

Auch bei dieser bekannten Lösung kann mit dem zwischen den Seitenwänden 1 und 1' angeordnete Maschinentisch 8 für die Werkstücke und das darüber angeordneten Führungssystem gesichert werden, dass der Zerspanungsraum frei von kritischen Bauteilen bzw. Elementen gehalten ist.

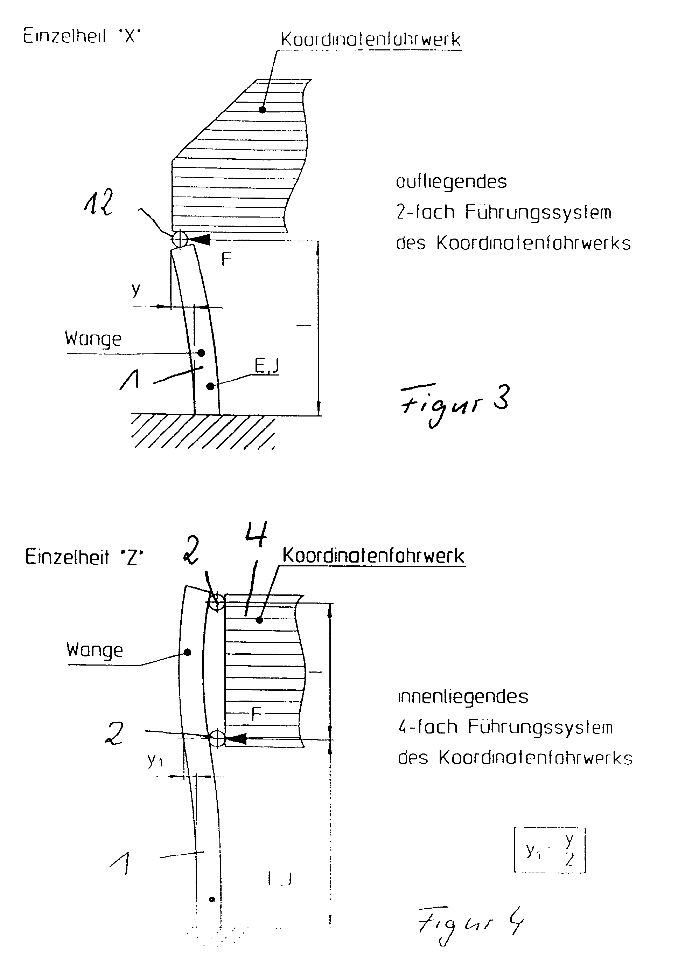

Nachteilig wirkt sich aber insbesondere die Anordnung der verwendeten Führungen 12 und 15 und hier insbesondere der Führungen 12 auf den Seitenwänden 1 und 1' aus, was mit der schematischen Darstellung in Figur 3 zum Ausdruck gebracht worden ist, in der die Einzelheit X aus der rechten Darstellung von Figur 1 gezeigt wird.

Dabei wirken bei der Bearbeitung axial nach außen gerichtete Kräfte auf die Führung 12, die zum Verbiegen der Seitenwände 1 und 1' und demzufolge auch zu einer Auslenkung mit dem Betrag y führt, die bei gleichen wirkenden Kräften lediglich durch das Seitenwandmaterial mit dem entsprechenden E-Modul und dem Flächenträgheitsmoment bzw. Widerstandsmoment der Seitenwand 1, 1' beeinflusst wird.

Im Gegensatz dazu wird beim erfindungsgemäßen Führungssystem eine innenliegende Doppelführung in zwei Ebenen eingesetzt.

Hierzu sind an den Seitenwänden 1 und 1' innenliegend paarweise in zwei voneinander beabstandeten Ebenen Führungen 2 vorhanden, mit denen Brückenträger 4 eines Koordinatenfahrwerks und gegebenenfalls auch ein so genanntes Kreuzteil 3 entlang der y-Achse bewegt und in Bezug zu einem Werkstück bzw. Bauteil (hier nicht dargestellt) verschoben werden kann. Hierzu können nicht dargestellte Antriebe und Wegmesssysteme, die mit einer elektronischen Steuerung verbunden sind, auch für eine Postitionierung entlang weiterer Achsen eingesetzt werden.

In der linken Darstellung von Figur 2 sind weitere Führungen 5 ebenfalls in zwei Ebenen, innenliegend an den zwei Brückenträgern 4 angeordnet, erkennbar, mit denen die Position der Pinole 6 und demzufolge auch die des hier nicht dargestellten Werkzeuges in einer orthogonal zur y-Achse liegenden x-Achse verändert werden kann.

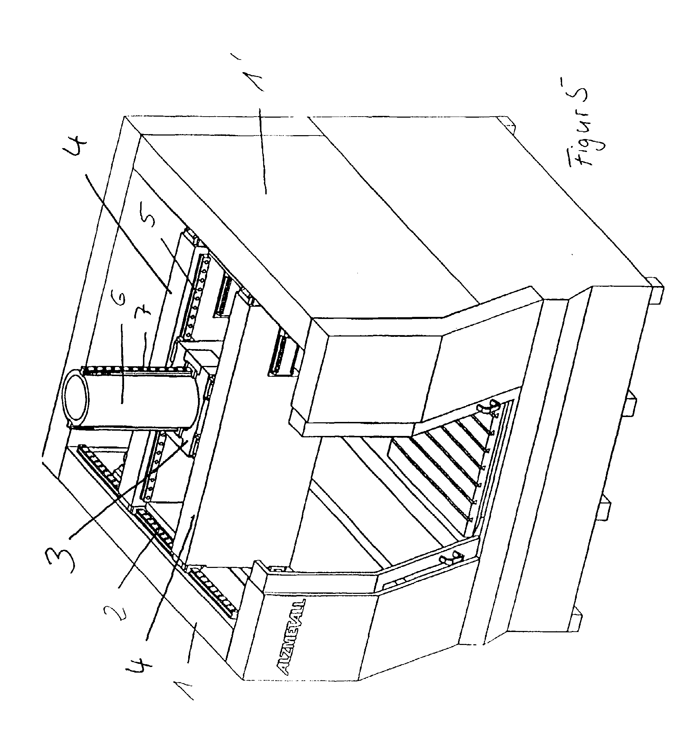

Wie insbesondere mit der in Figur 4 dargestellten Einzelheit "Z" aus der rechten Darstellung von Figur 2, mit den wirkenden Kräften und Verformungen wird deutlich, dass die Verformung und demzufolge auch der Betrag der Auslenkung y₁ gegenüber der Auslenkung y, wie sie beim Stand der Technik zu verzeichnen ist, bei gleichen Abmessungen und gleichen Seitenwandmaterialien halbiert werden kann.

Die Figur 5 zeigt eine perspektivische Darstellung eines Beispiels einer Werkzeugmaschine mit einem erfindungsgemäßen Führungssystem, bei der an den beiden gegenüberliegenden Seitenwänden 1 und 1' des Maschinengestells in zwei übereinanderliegenden Ebenen, innenliegend die Führungen 2 angeordnet sind. Im Koordinatenfahrwerk sind an den Brückenträgern 4 zwischen den an beiden Seiten angeordneten Führungen 2, orthogonal zu diesen ausgerichtete, ebenfalls innenliegend, in zwei übereinander angeordneten Ebenen weitere Führungen 5 für ein Kreuzteil 3 mit Pinole 6 vorhanden. Dadurch ist das Koordinatenfahrwerk mit dem erfindungsgemäßen Führungssystem, mit den bereits mehrfach erwähnten Vorteilen, in der Lage, die Position der Pinole 6 in Bezug zu einem zu bearbeitenden, auf einem Maschinentisch 8 gespannten Werkstück genauer einzuhalten.

Mit Hilfe der an den Außenseiten der Pinole 6, sich gegenüberliegend angeordneten weiteren Führungen 7, kann die Pinole 6 und demzufolge auch das Werkzeug entlang der z-Achse, die in diesem Fall in der Vertikalen liegt, verschoben und positioniert werden, so dass eine Drei-Koordinatenpositionierung, mit gegenüber den bekannten Lösungen erheblich erhöhter statischer - und dynamischer Steifigkeit und demzufolge verbesserter Fertigungsgenauigkeit, bei vergleichbaren Belastungen und Konstruktionen erreicht werden kann.

## Patentansprüche

1. Werkzeugmaschine zur zerspanenden Bearbeitung von Bauteilen mit Führungssystem für ein Koordinatenfahrwerk, bei dem der Hauptantrieb für Werkzeuge im Koordinatenfahrwerk geführt und gehalten ist, bei dem innenliegend jeweils zwei in einem Abstand voneinander angeordnete und parallel zueinander ausgerichtete Führungen (2) vorhanden sind, **dadurch gekennzeichnet, dass** die Führungen (2) an zwei parallel zueinander ausgerichteten Seitenwänden (1, 1') des Maschinengestells der Werkzeugmaschine angeordnet und in den Führungen (2) zwei Brückenträger(4) des Koordinatenfahrwerks mit dazwischen angeordnetem Kreuzteil (3) gehalten und entlang einer Achse geführt sind.

2. Werkzeugmaschine nach Anspruch 1,
**dadurch gekennzeichnet, dass** an den Brückenträgern (4) des Koordinatenfahrwerks sich paarweise gegenüber- und innenliegend, orthogonal zu den an den Seitenwänden (1, 1') angeordneten Führungen (2) ausgerichtete, weitere Führungen (5) angeordnet sind.

3. Werkzeugmaschine nach Anspruch 2,
**dadurch gekennzeichnet, dass** in den Führungen (5) der Brückenträger (4) in einem Kreuzteil (3) eine Pinole (6) für den Werkzeugantrieb geführt und gehalten ist.

4. Werkzeugmaschine nach Anspruch 3,
**dadurch gekennzeichnet, dass** die Pinole (6) in zwei, orthogonal zu zumindest einer der Führungen (2) und/oder (5) ausgerichteten und an sich gegenüberliegenden Seiten der Pinole (6) angeordneten Führungen (7) geführt ist.

5. Werkzeugmaschine nach einem der Ansprüche 1 bis 4,
**dadurch gekennzeichnet, dass** ein Maschinentisch (8) zum Spannen von Werkstücken zwischen den Seitenwänden (1, 1') mit den Führungen (2) angeordnet ist.

## Claims

1. Machine tool for the machine-cutting of components, having a guide system for a coordinate carriage, in which the main drive for tools is guided and held in the coordinate carriage, in which, situated on the inside, respectively two guides (2) are present which are spaced apart in parallel alignment, **characterized in that** the guides (2) are disposed on two mutually parallel side walls (1, 1') of the machine frame of the machine tool and, in the guides (2), two bridge beams (4) of the coordinate carriage, with cross part (3) disposed between them, are held and guided along an axis.

2. Machine tool according to Claim 1, **characterized in that** on the bridge beams (4) of the coordinate carriage there are disposed further guides (5), which are situated on the inside one opposite the other in pairs and are aligned orthogonal to the guides (2) disposed on the side walls (1, 1').

3. Machine tool according to Claim 2, **characterized in that**, in the guides (5) of the bridge beams (4), in a cross part (3), a quill (6) for the tool drive is guided and held.

4. Machine tool according to Claim 3, **characterized in that** the quill (6) is guided in two guides (7) aligned orthogonal to at least one of the guides (2) and/or (5) and disposed on mutually opposite sides of the quill (6).

5. Machine tool according to one of Claims 1 to 4, **characterized in that** a machine table (8) for holding workpieces is disposed between the side walls (1, 1') bearing the guides (2).

## Revendications

1. Machine-outil pour l'usinage avec enlèvement de copeaux de composants, comportant un système de guidage pour un châssis à déplacements rectangulaires conjugués, dans laquelle le dispositif d'entraînement principal pour les outils est guidé et retenu dans le châssis à déplacements rectangulaires conjugués, dans laquelle deux guides (2) situés à distance l'un de l'autre et orientés de manière à être parallèles entre eux sont présentés respectivement sur le côté intérieur, **caractérisée en ce que** les guides (2) sont disposés sur deux parois latérales (1,1'), qui sont parallèles entre elles, du bâti de la machine-outil et que deux supports en forme d'étriers (4) du châssis à déplacements rectangulaires conjugués, entre lesquels est disposée une partie cruciforme (3), sont retenus dans les guides (2) et sont guidés le long d'un axe.

2. Machine-outil selon la revendication 1, **caractérisée en ce que** sur les supports en forme d'étriers (4) du châssis à déplacements rectangulaires conjugués sont disposés d'autres guides (5), qui sont disposés par couples en vis-à-vis et intérieurement, perpendiculairement aux guides (2) disposés sur les parois latérales (1,1').

3. Machine-outil selon la revendication 2, **caractérisée en ce qu'**une douille (6) pour l'entraînement de l'outil est guidée et retenue dans une partie cruciforme (3) dans les guides (5) des supports en forme d'étriers (4).

4. Machine-outil selon la revendication 3, **caractérisée en ce que** la douille (6) est guidée dans deux guides (7), qui sont orientés orthogonalement par rapport à au moins l'un des guides (2) et/ou (5), et sont disposés sur des côtés opposés de la douille (6).

5. Machine-outil selon la revendication 1 à 4, **caractérisée en ce qu'**une table (8) de la machine est disposée pour le serrage de pièces à usiner, entre les parois latérales (1,1') équipées des guides (2).
